# EUROPÄISCHE PATENTSCHRIFT

(11) **EP 3 104 103 B1**
(45) Veröffentlichungstag und Bekanntmachung des Hinweises auf die Patenterteilung: **05.08.2020**
(21) Anmeldenummer: 16170352.5
(22) Anmeldetag: 19.05.2016
(51) Int. Cl.: F25B 21/00

(54) **TEMPERIERGERÄT, INSBESONDERE FAHRZEUGTEMPERIERGERÄT**
TEMPERATURE CONTROL DEVICE, IN PARTICULAR VEHICLE TEMPERATURE CONTROL DEVICE
THERMORÉGULATEUR EN PARTICULIER THERMORÉGULATEUR DE VÉHICULE AUTOMOBILE

(30) Priorität: 08.06.2015 DE 102015108954
(43) Veröffentlichungstag der Anmeldung: 14.12.2016
(73) Patentinhaber: Eberspächer Climate Control Systems GmbH & Co. KG, 73730 Esslingen (DE)
(72) Erfinder: Humburg, Michael, 73035 Göppingen (DE)
(74) Vertreter: Ruttensperger Lachnit Trossin Gomoll

(56) Entgegenhaltungen:
- EP-A1- 2 706 309
- EP-A2- 2 645 015
- WO-A1-2014/034374
- DE-T2-602004 006 025
- DE-T2-602004 007 299
- US-A1- 2014 130 515

## Beschreibung

Die vorliegende Erfindung betrifft ein Temperiergerät, insbesondere ein Fahrzeugtemperiergerät, gemäß dem Oberbegriff des Anspruchs 1, welches unter Ausnutzung des magnetokalorischen Effektes zum Kühlen oder Erwärmen beispielsweise eines Fahrzeuginnenraums eingesetzt werden kann.

Bei Wärmepumpen, die unter Ausnutzung des magnetokalorischen Effektes arbeiten, wird magnetokalorisches Material alternierend in ein Magnetfeld hinein und aus dem Magnetfeld heraus bewegt. Beim Bewegen in das Magnetfeld hinein findet eine Spinausrichtung der Elektronen des magnetokalorischen Materials unter Einfluss des Magnetfeldes statt. Diese Spinausrichtung bzw. Ausrichtung der magnetischen Momente in dem Magnetfeld hat zur Folge, dass die magnetische Entropie sinkt. Da die Gesamtentropie des Systems nicht abnehmen kann, erhöht sich eine in einem Temperaturanstieg sich manifestierende thermische Entropie. Wird das magnetokalorische Material aus dem Magnetfeld heraus bewegt, findet der umgekehrte Prozess statt. Die Temperatur eines aus einem Magnetfeld herausbewegten magnetokalorischen Materials nimmt ab.

Da im Vergleich zu in konventionellen Kühlgeräten bzw. Wärmepumpen genutzten thermodynamischen Prozessen unter Ausnutzung des magnetokalorischen Effektes nur geringere Temperaturunterschiede hervorgerufen werden können, ist es zur Bereitstellung einer diese Temperaturunterschiede übersteigenden Temperaturänderung des magnetokalorischen Materials bzw. eines von diesem Wärme aufnehmenden Fluids erforderlich, mehrstufige Prozesse durchzuführen, in welchen durch Hintereinanderschaltung mehrerer den magnetokalorischen Effekt nutzender Systeme eine sukzessive Temperaturänderung erreicht wird.

Ein Temperiergerät gemäß dem Oberbegriff des Anspruchs 1 ist aus der DE 60 2004 007 299 T2 bekannt.

Es ist die Aufgabe der vorliegenden Erfindung, ein unter Ausnutzung des magnetokalorischen Effekts arbeitendes Temperiergerät, insbesondere Fahrzeugtemperiergerät, bereitzustellen, welches bei einfachem und kompaktem Aufbau zur Erreichung größerer Temperaturänderungen betreibbar ist.

Erfindungsgemäß wird diese Aufgabe gelöst durch ein Temperiergerät, insbesondere Fahrzeugtemperiergerät, gemäß Anspruch 1. Dieses umfasst:
- wenigstens einen von einem Wärmeträgermedium durchströmbaren oder/und umströmbaren, mit magnetokalorischem Material aufgebauten, in einer Temperierkörperlängsrichtung langgestreckten Temperierkörper,
- eine Magnetfeldanordnung mit in einer Verschieberichtung aufeinander folgend angeordneten Magnetfeld-Erwärmungsbereichen und Kühlbereichen zwischen den Magnetfeld-Erwärmungsbereichen,
wobei mit dem Temperierkörper eine Mehrzahl von in der Temperierkörperlängsrichtung aufeinander folgenden Wärmeträgermedium-Strömungszonen bereitgestellt ist, wobei wenigstens zwei in der Temperierkörperlängsrichtung einander benachbarte Wärmeträgermedium-Strömungszonen einen Wärmeträgermedium-Zirkulationssektor bereitstellen,
wobei wenigstens eine Wärmeträgermedium-Strömungszone von Wärmeeintragfluid zum Eintragen von Wärme in diese Wärmeträgermedium-Strömungszone durchströmbar oder/und umströmbar ist, oder/und wobei wenigstens eine Wärmeträgermedium-Strömungszone von Wärmeabfuhrfluid zur Abfuhr von Wärme aus dieser Wärmeträgermedium-Strömungszone durchströmbar oder/und umströmbar ist.

Das erfindungsgemäße Temperiergerät kann unter Ausnutzung des magnetokalorischen Effekts nach Art einer Wärmepumpe arbeiten, um durch thermische Wechselwirkung einerseits das Wärmeeintragfluid zu kühlen, andererseits das Wärmeabfuhrfluid zu erwärmen. Es wird also Wärme vom Wärmeeintragfluid auf das Wärmeabfuhrfluid übertragen. Je nachdem, ob das erfindungsgemäße Temperiergerät als Heizgerät oder als Kühlgerät genutzt werden soll, kann in einer zugeordneten Wärmetauscheranordnung das Wärmeeintragfluid genutzt werden, um ein anderes Medium, beispielsweise die in einen Fahrzeuginnenraum einzuleitende Luft, zu kühlen, oder kann das Wärmeabfuhrfluid genutzt werden, um beispielsweise die in einen Fahrzeuginnenraum einzuleitende Luft zu erwärmen. Da die Effizienz des erfindungsgemäßen Temperiergeräts mit zunehmender Temperatur insbesondere des Wärmeeintragfluids zunimmt, ist der Einsatz als Kühlgerät, beispielsweise als Fahrzeugklimatisiergerät, besonders vorteilhaft.

Um bei der Aufeinanderfolge von Wärmeträgermedium-Strömungszonen in Richtung der Temperierkörperlängsachse eine Anpassung der Lage der Wärmeträgermedium-Zirkulationssektoren an die Positionierung der Magnetfeldanordnung zu erreichen, ist ferner vorgesehen, dass wenigstens eine Wärmeträgermedium-Strömungszone während einer ersten Betriebsphase zusammen mit einer dieser Wärmeträgermedium-Strömungszone an einer ersten Seite in der Temperierkörperlängsrichtung benachbarten Wärmeträgermedium-Strömungszone einen Wärmeträgermedium-Zirkulationssektor bereitstellt und während einer zweiten Betriebsphase zusammen mit einer dieser Wärmeträgermedium-Strömungszone an einer zweiten Seite in der Temperierkörperlängsrichtung benachbarten Wärmeträgermedium-Strömungszone einen Wärmeträgermedium-Zirkulationssektor bereitstellt.

Um in diesem Prozess der alternierenden Umschaltung auch die von Wärmeabfuhrfluid bzw. Wärmeeintragfluid durchströmbaren Wärmeträgermedium-Strömungszongen einzubeziehen, ist erfindungsgemäß ferner vorgesehen, dass in einer Betriebsphasenart von erster Betriebsphase und zweiter Betriebsphase die wenigstens eine von Wärmeabfuhrfluid durchströmbare Wärmeträgermedium-Strömungszone von Wärmeabfuhrfluid durchströmbar ist und die wenigstens eine von Wärmeeintragfluid durchströmbare Wärmeträgermedium-Strömungszone von Wärmeeintragfluid durchströmbar ist, und dass in der anderen Betriebsphasenart von erster Betriebsphase und zweiter Betriebsphase die von Wärmeabfuhrfluid durchströmbare Wärmeträgermedium-Strömungszone zusammen mit einer dieser in der Temperierkörperlängsrichtung benachbarten Wärmeträgermedium-Strömungszone einen Wärmeträgermedium-Zirkulationssektor bereitstellt und die von Wärmeeintragfluid durchströmbare Wärmeträgermedium-Strömungszone zusammen mit einer dieser in der Temperierkörperlängsrichtung benachbarten Wärmeträgermedium-Strömungszone einen Wärmeträgermedium-Zirkulationssektor bereitstellt.

Vorteilhafterweise wechseln erste Betriebsphasen und zweite Betriebsphasen einander alternierend ab. Betrieben wird ein mehrstufiger Temperierbetrieb mit entsprechend sukzessiver Temperaturveränderung erreicht.

Vorteilhafterweise entspricht die Temperierkörperlängsrichtung im Wesentlichen der Verschieberichtung, also derjenigen Richtung, entlang welcher eine Relativverschiebebewegung, im Wesentlichen also eine Linear-Relativbewegung, zwischen der Magnetfeldanordnung und dem Temperierkörper generiert wird.

Um in einfacher Art und Weise eine sukzessive Temperaturänderung herbeiführen zu können, wird vorgeschlagen, dass bei wenigstens einem Wärmeträgermedium-Zirkulationssektor eine Zirkulation von Wärmeträgermedium vorgesehen ist, wobei bei der Zirkulation Wärmeträgermedium aus einer der Wärmeträgermedium-Strömungszonen dieses Wärmeträgermedium-Zirkulationssektors abgezogen und in die andere Wärmeträgermedium-Strömungszone dieses Wärmeträgermedium-Zirkulationssektors eingeleitet wird und Wärmeträgermedium aus der anderen Wärmeträgermedium-Strömungszone abgezogen und in die eine Wärmeträgermedium-Strömungszone eingeleitet wird. Dabei kann zum Berücksichtigen der Relativverschiebebewegung zwischen der Magnetfeldanordnung und dem Temperierkörper eine kompakte Bauart erreicht werden, wenn das Wärmeträgermedium aus der einen Wärmeträgermedium-Strömungszone an einer im Wesentlichen orthogonal zur Temperierkörperlängsrichtung gelegenen Seite des Temperierkörpers abgezogen und in die andere Wärmeträgermedium-Strömungszone an der selben Seite eingeleitet wird und aus der anderen Wärmeträgermedium-Strömungszone an einer anderen im Wesentlichen orthogonal zur Temperierkörperlängsrichtung gelegenen Seite abgezogen und in die eine Wärmeträgermedium-Strömungszone an der selben Seite eingeleitet wird. Insbesondere kann dabei vorgesehen sein, dass bei wenigstens einem Wärmeträgermedium-Zirkulationssektor wenigstens eine Wärmeträgermediumleitung von der einen Wärmeträgermedium-Strömungszone zu der anderen Wärmeträgermedium-Strömungszone führt und wenigstens eine Wärmeträgermediumleitung von der anderen Wärmeträgermedium-Strömungszone zu der einen Wärmeträgermedium-Strömungszone führt.

Zur Anpassung der Lage der Wärmeträgermedium-Zirkulationssektoren an die Lage des Magnetfeldes der Magnetfeldanordnung wird vorgeschlagen, dass bei wenigstens einer Wärmeträgermedium-Strömungszone ein von oder zu dieser führender Leitungsabschnitt einer Wärmeträgermediumleitung mit einem von oder zu einer dieser Wärmeträgermedium-Strömungszone an der ersten Seite in der Temperierkörperlängsrichtung benachbarten Wärmeträgermedium-Strömungszone führenden Leitungsabschnitt einer Wärmeträgermediumleitung verbindbar ist oder mit einem von oder zu einer dieser Wärmeträgermedium-Strömungszone an der zweiten Seite in der Temperierkörperlängsrichtung benachbarten Wärmeträgermedium-Strömungszone führenden Leitungsabschnitt einer Wärmeträgermediumleitung verbindbar ist.

Insbesondere kann dabei vorgesehen sein, dass der von oder zu der wenigstens einen Wärmeträgermedium-Strömungszone führende Leitungsabschnitt einer Wärmeträgermediumleitung während einer ersten Betriebsphase mit dem von oder zu der dieser Wärmeträgermedium-Strömungszone an der ersten Seite in der Temperierkörperlängsrichtung benachbarten Wärmeträgermedium-Strömungszone führenden Leitungsabschnitt einer Wärmeträgermediumleitung verbunden ist und während einer zweiten Betriebsphase mit dem von oder zu der dieser Wärmeträgermedium-Strömungszone an der zweiten Seite in der Temperierkörperlängsrichtung benachbarten Wärmeträgermedium-Strömungszone führenden Leitungsabschnitt einer Wärmeträgermediumleitung verbunden ist.

Eine Umschaltbarkeit zwischen diesen verschiedenen Strömungszuständen bzw. Stömungsverbindungen kann beispielsweise dadurch erreicht werden, dass die Leitungsabschnitte durch ein schaltbares Ventil verbindbar sind.

Ferner kann zum Bereitstellen der Zirkulation von Wärmeträgermedium durch die verschiedenen Wärmeträgermedium-Zirkulationssektoren hindurch vorgesehen sein, dass wenigstens einem, vorzugsweise jedem, Wärmeträgermedium-Zirkulationssektor eine Wärmeträgermediumpumpe zugeordnet ist.

Die Anzahl der zum Bereitstellen der Zirkulation erforderlichen Wärmeträgermediumpumpen kann gemäß einem vorteilhaften Aspekt dadurch gering gehalten werden, dass in Zuordnung zu jeder zweiten der in der Temperierkörperlängsrichtung aufeinander folgenden Wärmeträgermedium-Strömungszonen eine Wärmeträgermediumpumpe vorgesehen ist, derart, dass diese Wärmeträgermedium-Strömungszonen in einer ersten Betriebsphase zusammen mit den an der ersten Seite in der Temperierkörperlängsrichtung diesen benachbarten Wärmeträgermedium-Strömungszonen jeweils einen Wärmeträgermedium-Zirkulationssektor bereitstellen und in einer zweiten Betriebsphase zusammen mit den an der zweiten Seite in der Temperierkörperlängsrichtung diesen benachbarten Wärmeträgermedium-Strömungszonen jeweils einen Wärmeträgermedium-Zirkulationssektor bereitstellen.

Bei der im Wesentlichen in Richtung der Temperierkörperlängsrichtung geradlinig sich erstreckenden Ausgestaltung des erfindungsgemäßen Temperiergeräts können zur Durchführung eines mehrstufigen Temperierprozesses vorteilhafterweise mehrere Wärmeträgermedium-Zirkulationssektoren in der Temperierkörperlängsrichtung aufeinander folgend bereitgestellt werden.

Um eine eine geeignete Wechselwirkung mit dem Temperierkörper zulassende Durchströmbarkeit des Temperierkörpers zu gewährleisten, wird vorgeschlagen, dass dieser in einem Temperierkörpergehäuse aufgenommen ist. Auch Leckagen des Wärmeträgermediums aus dem Bereich des Temperiergeräts können somit vermieden werden.

Zur Bereitstellung einer effizienten Wechselwirkung des von der Magnetfeldanordnung generierten Magnetfelds mit dem Temperierkörper wird vorgeschlagen, dass die Magnetfeldanordnung an wenigstens einer Seite im Wesentlichen orthogonal zur Temperierkörperlängsrichtung eine Mehrzahl von in der Temperierkörperlängsrichtung aufeinander folgend mit Abstand zueinander angeordneten und im Wesentlichen die Magnetfeld-Erwärmungsbereiche bereitstellenden Magneten, vorzugsweise Permanentmagnete, umfasst, wobei zwischen in der Temperierkörperlängsrichtung mit Abstand zueinander angeordneten Magneten die Kühlbereiche bereitgestellt sind. Dabei können in der Temperierkörperlängsrichtung aufeinander folgende Magnete an einem durch einen Antrieb zur Linearbewegung in der Verschieberichtung antreibbaren Magnetträger getragen sein.

Bei einer besonders vorteilhaften Ausgestaltung wird vorgeschlagen, dass an zwei Seiten des Temperierkörpers im Wesentlichen orthogonal zur Temperierkörperlängsrichtung jeweils eine Mehrzahl von in der Temperierkörperlängsrichtung aufeinander folgend und mit Abstand zueinander angeordneten Magneten vorgesehen ist, wobei wenigstens einem, vorzugsweise jedem, Magneten an einer Seite ein Magnet an der anderen Seite gegenüberliegt.

Um unter Berücksichtigung der langgestreckten Ausgestaltung des erfindungsgemäßen Temperiergeräts zur Durchführung des mehrstufigen Temperierprozesses der Wärme eintragen bzw. austragen zu können, wird weiter vorgeschlagen, dass die von Wärmeeintragfluid durchströmbare oder/und umströmbare Wärmeträgermedium-Strömungszone an einem Längsendbereich des Temperierkörpers vorgesehen ist und die von Wärmeabfuhrfluid durchströmbare oder/und umströmbare Wärmeträgermedium-Strömungszone am anderen Längsendbereich des Temperierkörpers vorgesehen ist.

Die vorliegende Erfindung wird nachfolgend mit Bezug auf die beiliegenden Figuren detailliert beschrieben. Es zeigt:
- Fig. 1: eine prinzipartige Perspektivdarstellung eines den magnetokalorischen Effekt nutzenden Temperiergeräts;
- Fig. 2: eine Prinzipdarstellung des Temperiergeräts zur Verdeutlichung der für die Bereitstellung lagevariabler Wärmeträgermedium-Zirkulationssektoren vorgesehenen Wärmeträgermediumleitungen, wobei das Temperiergerät in einer ersten Betriebsphase ist;
- Fig. 3: eine der Fig. 2 entsprechende Darstellung, wobei das Temperiergerät in einer zweiten Betriebsphase ist.

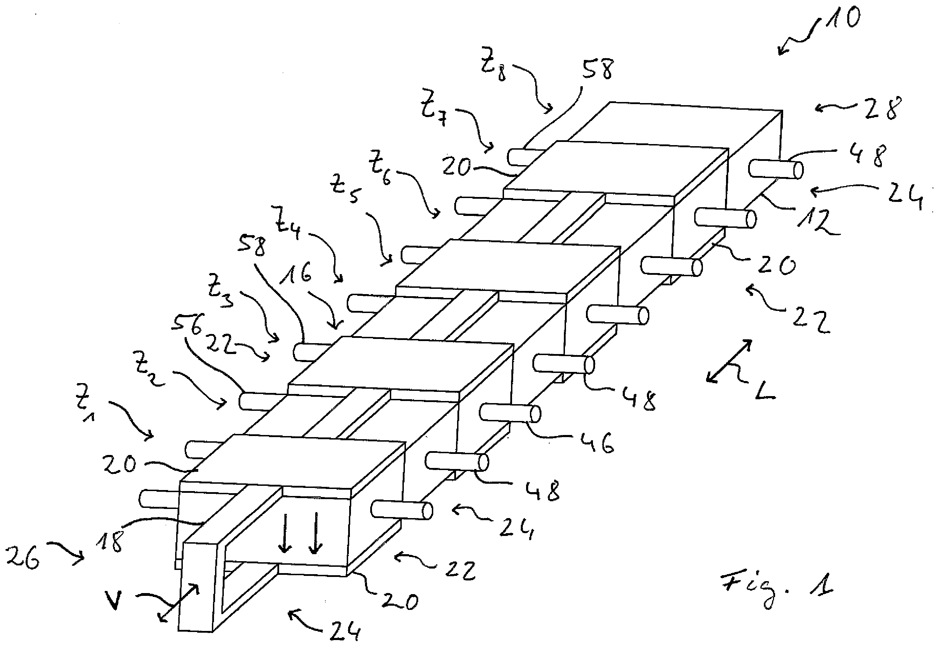

Die Fig. 1 zeigt in perspektivischer Ansicht ein allgemein mit 10 bezeichnetes Temperiergerät, durch welches in einem mehrstufigen Prozess unter Ausnutzung des magnetokalorischen Effekts Wärme übertragen werden kann. Das Temperiergerät 10 umfasst einen in einem Temperierkörpergehäuse 12 aufgenommenen Temperierkörper 14 aus magnetokalorischem Material. Das Temperierkörpergehäuse 12 und der darin angeordnete Temperierkörper 14 sind in Richtung einer Temperierkörperlängsachse L langgestreckt. Dabei ist eine Mehrzahl von in einer Temperierkörperlängsrichtung L aufeinander folgenden Wärmeträgermedium-Strömungszonen Z₁, Z₂, Z₃, Z₄, Z₅, Z₆, Z₇ und Z₈, nachfolgend allgemein als Zᵢ angesprochen, gebildet. Für jede dieser Wärmeträgermedium-Strömungszonen Zᵢ kann der Temperierkörper 14 mit einem in einem abgeschlossenen Innenraumbereich des Temperierkörpergehäuses 12 vorgesehenen Temperierkörpersegment ausgebildet sein, wobei die verschiedenen Wärmeträgermedium-Strömungszonen Zᵢ zugeordneten Temperierkörpersegmente voneinander durch entsprechende Wandungsbereiche des Temperierkörpergehäuses 12 getrennt sein können. Grundsätzlich kann aber auch ein durchgehender Materialblock des Temperierkörpers 12 sich durch alle oder einen Teil der Wärmeträgermedium-Strömungszonen Zᵢ hindurch erstrecken.

In Fig. 1 erkennbar ist ferner eine allgemein mit 16 bezeichnete Magnetfeldanordnung. Diese umfasst an einem in einer Verschieberichtung V durch einen Bewegungsantrieb, beispielsweise einen elektromotorischen Antrieb, im Wesentlichen linear verschiebbaren Magnetträger 18 eine Mehrzahl von in der Verschieberichtung V bzw. der Temperierkörperlängsrichtung L aufeinander folgenden Permanentmagneten 20. Dabei ist eine erste Gruppe dieser Magnete 20 an einer Seite im Wesentlichen orthogonal zur Temperierkörperlängsachse L, in Fig. 1 der oben liegenden Seite des Temperierkörpers 14 angeordnet. Eine zweite Gruppe von Permanentmagneten 20 ist an der anderen, gegenüberliegenden und zur Temperierkörperlängsachse L im Wesentlichen orthogonal orientierten Seite angeordnet, so dass Permanentmagnete 20 mit unterschiedlichen Polaritäten einander zugewandt und den Temperierkörper 14 zwischen sich aufnehmend einander paarweise gegenüberliegen. Zwischen diesen paarweise einander gegenüberliegenden Permanentmagneten 20 bildet sich ein Magnetfeld M. Jedes Paar derartig einander gegenüberliegender Permanentmagnete 20 bildet einen Magnetfeld-Erwärmungsbereich 22. Zwischen zwei in der Temperierkörperlängsrichtung L aufeinander folgenden Magnetfeld-Erwärmungsbereichen liegt jeweils ein durch einen Zwischenraum dazwischen gebildeter Kühlbereich 24.

Durch Verschiebung des Magnetträgers 18 in der Verschieberichtung V wird es möglich, die Magnetfeld-Erwärmungsbereiche so zu verschieben, dass sie alternierend jeweils mit einer von zwei unmittelbar benachbarten Wärmeträgermedium-Strömungszongen ausgerichtet sind. Beispielsweise liegt bei der in Fig. 1 dargestellten Positionierung der am weitesten links unten erkennbare Magnetfeld-Erwärmungsbereich 22 in Ausrichtung mit der Wärmeträgermedium-Strömungszone Z₁, während der unmittelbar folgende Kühlbereich 24 in Ausrichtung mit der unmittelbar folgenden Wärmeträgermedium-Strömungszone Z₂ liegt. Bei Verschiebung des Magnetträgers 18 in der Darstellung der Fig. 1 nach rechts oben bewegt sich der zunächst mit der Wärmeträgermedium-Strömungszone Z₁ ausgerichtete Magnetfeld-Erwärmungsbereich 22 in den Bereich der Wärmeträgermedium-Strömungszone Z₂. Der auf diesen Magnetfeld-Erwärmungsbereich 22 folgende Kühlbereich 24 ist dann mit der Wärmeträgermedium-Strömungszone Z₃ ausgerichtet. Auch im Bereich der Wärmeträgermedium-Strömungszone Z₁ liegt in diesem Zustand dann ein dem in Fig. 1 links unten erkennbaren Magnetfeld-Erwärmungsbereich 22 vorangehender Kühlbereich 24.

Ein derartiges bei Hin- und Herverschiebung des Magnetträgers 18 alternierendes Ausrichten der Wärmeträgermedium-Strömungszonen Zᵢ entweder mit einem Magnetfeld-Erwärmungsbereich 22 oder einem Kühlbereich 24 und dabei der alternierenden Erzeugung bzw. Ausnutzung eines magnetokalorischen Effekts in jeweils denjenigen Wärmeträgermedium-Strömungszonen Zᵢ, welche in einer jeweiligen Betriebsphase mit einem Magnetfeld-Erwärmungsbereich 22 ausgerichtet sind, kann in einer nachfolgend beschriebenen Art und Weise dazu genutzt werden, Wärme zwischen den beiden in den Längsendbereichen 26, 28 des Temperierkörpers 14 positionierten Wärmeträgermedium-Strömungszonen Z₁ und Z₈ zu transportieren.

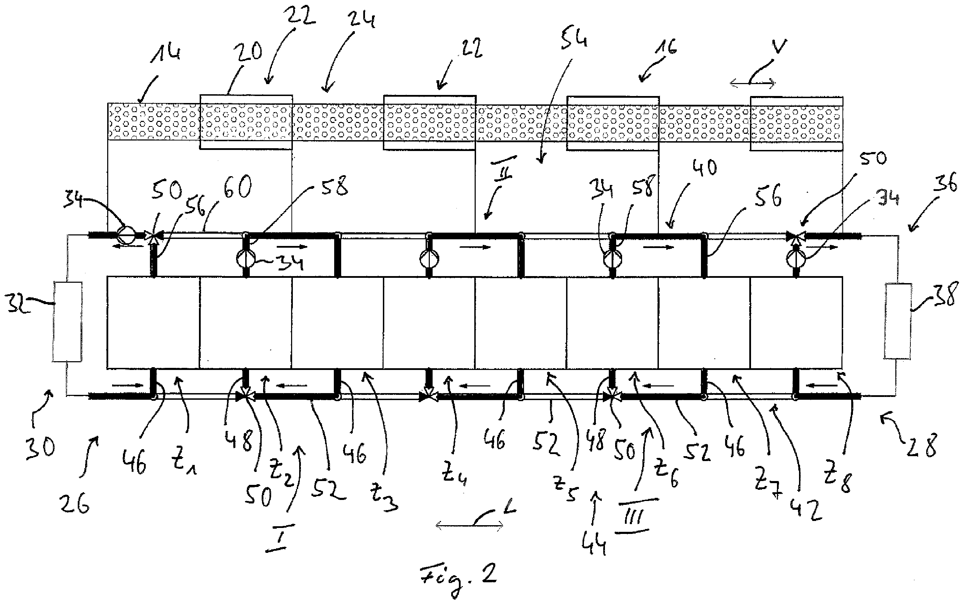

Man erkennt in der Darstellung der Fig. 2, dass die dort links positionierte Wärmeträgermedium-Strömungszone Z₁ in Strömungsverbindung mit einem Kreislauf 30 für Wärmeeintragfluid ist. Dieser Kreislauf 30 umfasst eine Wärmetauscheranordnung 32 sowie eine Pumpe 34. In entsprechender Weise ist in der in Fig. 2 veranschaulichten Betriebsphase die im anderen Längsendbereich 28 angeordnete Wärmeträgermedium-Strömungszone Z₈ in Verbindung mit einem Kreislauf 36 für Wärmeabfuhrfluid. Dieser Kreislauf 36 umfasst eine Wärmetauscheranordnung 38 sowie eine Pumpe 34.

In Temperierkörperlängsrichtung L einander unmittelbar benachbarte Wärmeträgermedium-Strömungszonen Zᵢ sind an ihren beiden im Wesentlichen orthogonal zur Temperierkörperlängsrichtung L und orthogonal zur Richtung des Magnetfelds M gelegenen Seiten durch jeweilige Wärmeträgermediumleitungen 40, 42 miteinander verbunden. Dies sei im Folgenden anhand der Wärmeträgermedium-Strömungszonen Z₅, Z₆ und Z₇ erläutert.

An der in Fig. 2 unten dargestellten Seite 44 des Temperierkörpers 14 bzw. des Temperierkörpergehäuses 12 mündet in das Temperierkörpergehäuse 12 jeweils ein Leitungsabschnitt 46 ein. In die dazwischen liegende Wärmeträgermedium-Strömungszone Z₆ mündet ein Leitungsabschnitt 48 ein. Dieser führt zu einem Ventil, z. B. 3/2-Wege-Ventil 50. Die Leitungsabschnitte 46 der Wärmeträgermedium-Strömungszonen Z₅ und Z₇ stehen über Leitungsabschnitte 52 ebenfalls in Verbindung mit dem 3/2-Wege-Ventil 50.

An der in Fig. 2 oben dargestellten Seite 54 münden im Bereich der Wärmeträgermedium-Strömungszone Z₅ und Z₇ jeweilige Leitungsabschnitte 56 in das Temperierkörpergehäuse 12 ein. Im Bereich der Wärmeträgermedium-Strömungszone Z₆ mündet ein Leitungsabschnitt 58 ein, in welchem eine Pumpe 34 angeordnet ist. Die Leitungsabschnitte 56 der Wärmeträgermedium-Strömungszonen Z₅ und Z₇ sind über Leitungsabschnitte 60 in Verbindung mit dem Leitungsabschnitt 58.

Somit bilden an der Seite 44 jeweils ein Leitungsabschnitt 46, ein Leitungsabschnitt 52 und ein Leitungsabschnitt 48 eine Wärmeträgermediumleitung 42, während an der Seite 54 jeweils ein Leitungsabschnitt 56, ein Leitungsabschnitt 60 und ein Leitungsabschnitt 58 eine Wärmeträgermediumleitung 40 bereitstellen.

Im Bereich der in den Längsendbereichen 26, 18 liegenden Wärmeträgermedium-Strömungszonen Z₁ und Z₈ ist eine bauliche Änderung insofern vorhanden, als bei der Wärmeträgermedium-Strömungszone Z₁ der Leitungsabschnitt 56 an der Seite 54 über ein 3/2-Wege-Ventil 50 an den Leitungsabschnitt 60 einerseits bzw. den Kreislauf 30 andererseits anschließt bzw. anschließbar ist. Im Bereich der Wärmeträgermedium-Strömungszone Z₈ schließt der die Pumpe 34 enthaltene Leitungsabschnitt 58 über ein 3/2-Wege-Ventil 50 an den Leitungsabschnitt 60 bzw. den Kreislauf 36 an.

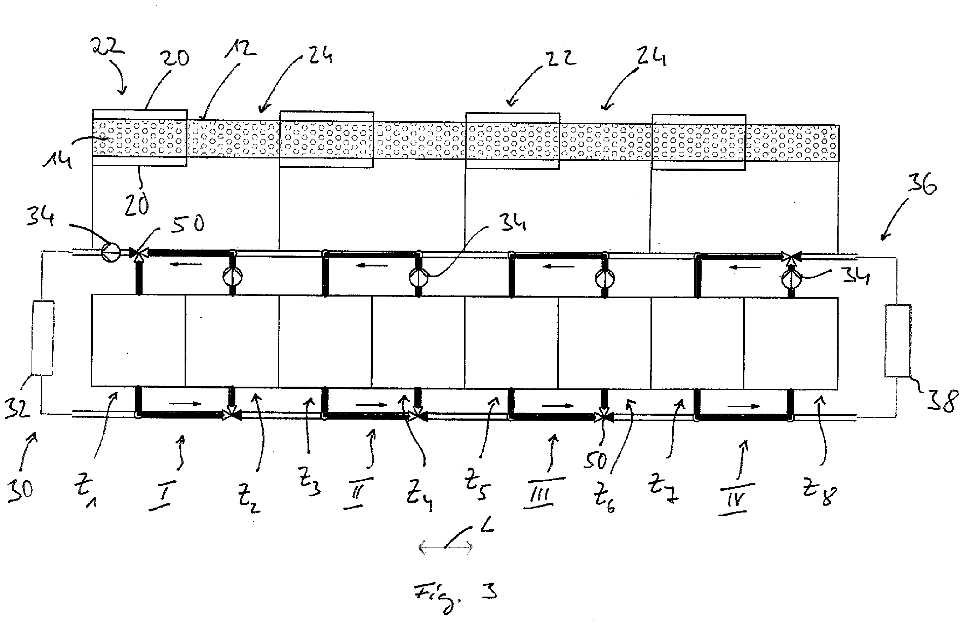

Nachfolgend wird mit Bezug auf die Fig. 2 und 3 der Betrieb des Temperiergeräts 10 zum Transportieren von Wärme von dem im Kreislauf 30 zirkulierenden Wärmeeintragfluid zu dem im Kreislauf 36 zirkulierenden Wärmeabfuhrfluid beschrieben. Dabei sei beispielsweise angenommen, dass vermittels des im Kreislauf 30 zirkulierenden Wärmeeintragfluids und der Wärmetauscheranordnung 32 die in einen Fahrzeuginnenraum einzuleitende Luft gekühlt werden soll, während im Bereich der Wärmetauscheranordnung 38 des Kreislaufs 36 Wärme nach außen, also zur Umgebung hin, abgegeben werden soll. Es ist selbstverständlich, dass bei entsprechend vertauschter Anordnung oder Zuordnung der Wärmetauscheranordnungen 32, 38 die in einen Fahrzeuginnenraum einzuleitende Luft auch erwärmt werden kann.

In der in Fig. 2 dargestellten ersten Betriebsphase sind die beiden Wärmeträgermedium-Strömungszonen Z₁ und Z₈ jeweils in Strömungsverbindung mit den Kreisläufen 30 bzw. 36. Zwischen diesen beiden Wärmeträgermedium-Strömungszonen Z₁ und Z₈ sind durch die Wärmeträgermedium-Strömungszonen Z₂ bis Z₆ insgesamt drei Wärmeträgermedium-Zirkulationssektoren I, II und III eingerichtet. Dazu sind die 3/2-Wege-Ventile, welche in Zuordnung zu den Wärmeträgermedium-Strömungszonen Z₂, Z₄ und Z₆ vorgesehen sind, so geschaltet, dass jeweils unter Förderwirkung der diesen Wärmeträgermedium-Strömungszonen auch zugeordneten Pumpen 34 eine durch dunkel dargestellte Leitungsabschnitte hindurch geführte Zirkulation des Wärmeträgermediums, also beispielsweise von Wasser, hervorgerufen wird. Es besteht dabei keine Stömungsverbindung zwischen den Wärmeträgermedium-Strömungszonen Z₁ und Z₂, Z₃ und Z₄, Z₅ und Z₆ sowie Z₇ und Z₈. Beispielsweise bildet in dieser ersten Betriebsphase die Wärmeträgermedium-Strömungszone Z₃ mit der an einer ersten Seite in der Temperierkörperlängsrichtung L dieser benachbart liegenden Wärmeträgermedium-Strömungszone Z₂ den Wärmeträgermedium-Zirkulationssektor I.

Ferner erkennt man, dass in der in Fig. 2 dargestellten ersten Betriebsphase die Permanentmagnete 20 der Magnetfeldanordnung 16 so positioniert sind, dass sie im Bereich der Wärmeträgermedium-Strömungszonen Z₂, Z₄, Z₆ und Z₈ liegen. Hervorgerufen durch den in diesen Wärmeträgermedium-Strömungszonen Z₂, Z₄, Z₆ und Z₈ generierten magnetokalorischen Effekt wird in diesen Bereichen der Temperierkörper 14 adiabatisch erwärmt. Durch das durch diese Wärmeträgermedium-Strömungszonen mit erwärmtem Temperierkörper 14 zirkulierende Wärmeträgermedium wird dort Wärme abgeführt und zu den jeweils unmittelbar benachbarten Wärmeträgermedium-Strömungszonen des jeweiligen Wärmeträgermedium-Zirkulationssektors I, II, III transportiert, in welchem ein jeweiliger Kühlbereich 24 der Magnetfeldanordnung 16 positioniert ist. Dies sind die Wärmeträgermedium-Strömungszonen Z₃, Z₅ und Z₇. Im Bereich der Wärmeträgermedium-Strömungszone Z₈, bei welcher der Temperierkörper 14 in dieser ersten Betriebsphase ebenfalls durch den magnetokalorischen Effekt erwärmt wird, wird durch das im Kreislauf 36 zirkulierende Wärmeabfuhrfluid Wärme aus dem Temperierkörper 14 abgeführt und im Bereich der Wärmetauscheranordnung 38 beispielsweise zur Umgebungsluft hin abgegeben. Im Bereich der Wärmeträgermedium-Strömungszone Z₁ zirkuliert das Wärmeeintragfluid im Kreislauf 30 durch einen Bereich des Temperierkörpers 14, der durch den magnetokalorischen Effekt nicht erwärmt ist, sondern auf niedrigerem Temperaturniveau ist. Dies hat zur Folge, dass das im Kreislauf 30 zirkulierende Wärmeeintragfluid gekühlt wird und dem im Bereich der Wärmeträgermedium-Strömungszone Z₁ liegenden Bereich des Temperierkörpers 14 Wärme zuführt bzw. bei dieser thermischen Wechselwirkung gekühlt wird.

Wird der Magnetträger 18 in die in Fig. 3 dargestellte und auch dem Zustand der Fig. 1 entsprechende Positionierung verschoben, so bewegen sich die Magnetfeld-Erwärmungsbereiche 22 nunmehr aus den Bereichen der Wärmeträgermedium-Strömungszonen Z₂, Z₄, Z₆ und Z₈ in die Bereiche der Wärmeträgermedium-Strömungszonen Z₁, Z₃, Z₅ und Z₇. Einhergehend mit dieser Verschiebung des Magnetträgers 18 werden die verschiedenen 3/2-Wege-Ventile 50 umgeschaltet, so dass in einer zweiten Betriebsphase nunmehr mit den Wärmeträgermedium-Strömungszonen Z₁ und Z₂ ein erster Wärmeträgermedium-Zirkulationssektor I gebildet ist, mit den Wärmeträgermedium-Strömungszonen Z₃ und Z₄ ein zweiter Wärmeträgermedium-Zirkulationssektor gebildet ist, mit den Wärmeträgermedium-Störmungszonen Z₅ und Z₆ ein dritter Wärmeträgermedium-Zirkulationssektor gebildet ist und mit den Wärmeträgermedium-Strömungszonen Z₇ und Z₈ ein vierter Wärmeträgermedium-Zirkulationssektor IV gebildet ist. In dieser zweiten Betriebsphase bildet nunmehr beispielsweise die Wärmeträgermedium-Strömungszone Z₃ zusammen mit der dieser an einer zweiten Seite in der Temperierkörperlängsrichtung L benachbarten Wärmeträgermedium-Strömungszone Z₄ den Wärmeträgermedium-Zirkulationssektor II. Die beiden Kreisläufe 30, 36 sind in dieser zweiten Betriebsphase abgekoppelt.

Durch das Bewegen der Permanentmagnete 20 der Magnetfeld-Erwärmungsbereiche 22 in Überdeckung mit den Wärmeträgermedium-Strömungszonen Z₁, Z₃, Z₅ und Z₇ wird dort ein magnetokalorischer Effekt auftreten und der Temperierkörper 14 erwärmt. In den nunmehr mit den Kühlbereichen 24 ausgerichteten Wärmeträgermedium-Strömungszonen Z₂, Z₄, Z₆ und Z₈ geht die durch die magnetische Wechselwirkung generierte Spinausrichtung verloren, was zu einer Abkühlung des Temperierkörpers 14 in diesen Bereichen führt. Dies hat zur Folge, dass beispielsweise im Wärmeträgermedium-Zirkulationssektor I aufgrund des in der Wärmeträgermedium-Strömungszone Z₁ erwärmten Temperierkörpers 14 das dort zirkulierende Wärmeträgermedium erwärmt wird und Wärme auf den im Bereich der Wärmeträgermedium-Strömungszone Z₂ liegenden Abschnitt des Temperierkörpers 14 überträgt. Dadurch wird den ungeradzahlig nummerierten Wärmeträgermedium-Strömungszonen Zᵢ Wärme entzogen und den geradzahlig nummerierten Wärmeträgermedium-Strömungszonen Wärme zugeführt.

Bei einem nachfolgenden erneuten Übergang in die in Fig. 2 dargestellte erste Betriebsphase werden durch das Wegbewegen der Magnetfeld-Erwärmungsbereiche 22 von den ungeradzahlig nummerierten Wärmeträgermedium-Strömungszonen Zᵢ diese bzw. der darin positionierte Abschnitt des Temperierkörpers 14 wieder gekühlt, während durch das Bewegen der Magnetfeld-Erwärmungsbereiche 22 in den Bereich der geradzahlig nummerierten Wärmeträgermedium-Strömungszonen Zᵢ dort bzw. in den dort liegenden Abschnitten des Temperierkörpers 14 eine Erwärmung auftreten wird. Dies hat zur Folge, dass in einem mehrstufigen Prozess Wärme aus dem Bereich der Wärmeträgermedium-Strömungszone Z₁ in den Bereich der Wärmeträgermedium-Strömungszone Z₈ gefördert wird. Der dabei in jeder Stufe entstehende Temperaturanstieg summiert sich zu einem Gesamttemperaturanstieg, so dass durch entsprechende Erhöhung der Anzahl an Stufen zwischen den in den Längsendbereichen 26, 28 liegenden Wärmeträgermedium-Strömungszonen Z₁ und Z₈ vorhandenen Wärmeträgermedium-Strömungszonen und den damit generierbaren Wärmeträgermedium-Zirkulationssektoren der Temperaturanstieg einstellbar bzw. vorgebbar ist. Auch die Größe bzw. die Geometrie der einzelnen Wärmeträgermedium-Strömungszonen kann zur Beeinflussung der Temperaturvariation angepasst werden. Ferner ist es selbstverständlich, dass mehrere derartige Geräte parallel arbeiten können, um Wärme zwischen den beiden Kreisläufen 30, 36 zu transportieren.

Um beim Umschalten zwischen den beiden in den Fig. 2 und 3 dargestellten Betriebsphasen dem System jeweils die Möglichkeit zu geben, sich an die geänderten thermischen Zustände anzupassen, kann dieses Umschalten intermittierend erfolgen. Dies bedeutet, dass nach Erreichen beispielsweise des in Fig. 2 dargestellten Zustandes der Magnetträger 18 zunächst in dieser Position verbleibt und das Wärmeträgermedium durch die Wärmeträgermedium-Zirkulationssektoren bzw. die Kreisläufe 30, 36 gefördert wird. Nach ausreichender Zirkulationsdauer können dann durch entsprechende Ansteuerung der 3/2-WegeVentile und Bewegung des Magnetträgers 18 18 in den in Fig. 3 dargestellten Zustand die in der zweiten Betriebsphase eingerichteten Wärmeträgermedium-Zirkulationssektoren I, II, III und IV zum Wärmetransport aktiviert werden und für eine vorbestimmte Zeitdauer aktiviert bleiben, bevor wieder in den Zustand der Fig. 2 geschaltet wird.

Da durch das Umschalten der Verbindungen der verschiedenen Wärmeträgermedium-Strömungszonen Zᵢ diese auch alternierend jeweils mit verschiedenen anderen Wärmeträgermedium-Strömungszonen Zᵢ in Strömungsverbindung gebracht werden, wird für das Gesamtsystem vorzugsweise ein und dasselbe Wärmeträgermedium, beispielsweise Wasser oder ein sonstiges für den Transport von Wärme in vorgesehenen Temperaturbereich geeignetes Fluid verwendet.

## Patentansprüche

1. Temperiergerät, insbesondere Fahrzeugtemperiergerät, umfassend:
- wenigstens einen von einem Wärmeträgermedium durchströmbaren oder/und umströmbaren, mit magnetokalorischem Material aufgebauten, in einer Temperierkörperlängsrichtung (L) langgestreckten Temperierkörper (14),
- eine Magnetfeldanordnung (16) mit in einer Verschieberichtung (V) aufeinander folgend angeordneten Magnetfeld-Erwärmungsbereichen (22) und Kühlbereichen (24) zwischen den Magnetfeld-Erwärmungsbereichen (22),
wobei mit dem Temperierkörper (14) eine Mehrzahl von in der Temperierkörperlängsrichtung (L) aufeinander folgenden Wärmeträgermedium-Strömungszonen (Zᵢ) bereitgestellt ist,
**dadurch gekennzeichnet,**
**dass** wenigstens zwei in der Temperierkörperlängsrichtung (L) einander benachbarte Wärmeträgermedium-Strömungszonen (Zᵢ) einen Wärmeträgermedium-Zirkulationssektor (I, II, III, IV) bereitstellen, wobei wenigstens eine Wärmeträgermedium-Strömungszone (Zᵢ) während einer ersten Betriebsphase zusammen mit einer dieser Wärmeträgermedium-Strömungszone (Zᵢ) an einer ersten Seite in der Temperierkörperlängsrichtung (L) benachbarten Wärmeträgermedium-Strömungszone (Zᵢ) einen Wärmeträgermedium-Zirkulationssektor (I, II, III) bereitstellt und während einer zweiten Betriebsphase zusammen mit einer dieser Wärmeträgermedium-Strömungszone (Zᵢ) an einer zweiten Seite in der Temperierkörperlängsrichtung (L) benachbarten Wärmeträgermedium-Strömungszone (Zᵢ) einen Wärmeträgermedium-Zirkulationssektor (I, II, III, IV) bereitstellt, und
**dass** eine in einem von zwei Längsendbereichen (26, 28) des Temperierkörpers (14) angeordnete Wärmeträgermedium-Strömungszone (Z₁) von Wärmeeintragfluid zum Eintragen von Wärme in diese Wärmeträgermedium-Strömungszone (Z₁) durchströmbar oder/und umströmbar ist, und eine in dem anderen der beiden Längsendbereiche (26, 28) des Temperierkörpers (14) angeordnete Wärmeträgermedium-Strömungszone (Z₈) von Wärmeabfuhrfluid zur Abfuhr von Wärme aus dieser Wärmeträgermedium-Strömungszone (Z₈) durchströmbar oder/und umströmbar ist, wobei in einer Betriebsphasenart von erster Betriebsphase und zweiter Betriebsphase die wenigstens eine von Wärmeabfuhrfluid durchströmbare Wärmeträgermedium-Strömungszone (Z₈) von Wärmeabfuhrfluid durchströmbar ist und die wenigstens eine von Wärmeeintragfluid durchströmbare Wärmeträgermedium-Strömungszone (Z₁) von Wärmeeintragfluid durchströmbar ist, und in der anderen Betriebsphasenart von erster Betriebsphase und zweiter Betriebsphase die von Wärmeabfuhrfluid durchströmbare Wärmeträgermedium-Strömungszone (Z₈) zusammen mit einer dieser in der Temperierkörperlängsrichtung (L) benachbarten Wärmeträgermedium-Strömungszone (Z₇) einen Wärmeträgermedium-Zirkulationssektor (IV) bereitstellt und die von Wärmeeintragfluid durchströmbare Wärmeträgermedium-Strömungszone (Z₁) zusammen mit einer dieser in der Temperierkörperlängsrichtung (L) benachbarten Wärmeträgermedium-Strömungszone (Z₂) einen Wärmeträgermedium-Zirkulationssektor (I) bereitstellt.

2. Temperiergerät nach Anspruch 1, **dadurch gekennzeichnet, dass** erste Betriebsphasen und zweite Betriebsphasen einander alternierend abwechseln.

3. Temperiergerät nach einem der Ansprüche 1 oder 2 **dadurch gekennzeichnet, dass** die Temperierkörperlängsrichtung (L) im Wesentlichen der Verschieberichtung (V) entspricht.

4. Temperiergerät nach einem der Ansprüche 1-3, **dadurch gekennzeichnet, dass** bei wenigstens einem Wärmeträgermedium-Zirkulationssektor (I, II, III, IV) eine Zirkulation von Wärmeträgermedium vorgesehen ist, wobei bei der Zirkulation Wärmeträgermedium aus einer der Wärmeträgermedium-Strömungszonen (Zᵢ) dieses Wärmeträgermedium-Zirkulationssektors (I, II, III, IV) abgezogen und in die andere Wärmeträgermedium-Strömungszone (Zᵢ) dieses Wärmeträgermedium-Zirkulationssektors (I, II, III, IV) eingeleitet wird und Wärmeträgermedium aus der anderen Wärmeträgermedium-Strömungszone (Zᵢ) abgezogen und in die eine Wärmeträgermedium-Strömungszone (Zᵢ) eingeleitet wird.

5. Temperiergerät nach Anspruch 4, **dadurch gekennzeichnet, dass** das Wärmeträgermedium aus der einen Wärmeträgermedium-Strömungszone (Zᵢ) an einer im Wesentlichen orthogonal zur Temperierkörperlängsrichtung (L) gelegenen Seite (44) des Temperierkörpers (14) abgezogen und in die andere Wärmeträgermedium-Strömungszone (Zᵢ) an der selben Seite (44) eingeleitet wird und aus der anderen Wärmeträgermedium-Strömungszone (Zᵢ) an einer anderen im Wesentlichen orthogonal zur Temperierkörperlängsrichtung (L) gelegenen Seite (54) abgezogen und in die eine Wärmeträgermedium-Strömungszone (Zᵢ) an der selben Seite (54) eingeleitet wird.

6. Temperiergerät nach Anspruch 4 oder 5, **dadurch gekennzeichnet, dass** bei wenigstens einem Wärmeträgermedium-Zirkulationssektor (Zᵢ) wenigstens eine Wärmeträgermediumleitung (40, 42) von der einen Wärmeträgermedium-Strömungszone (Zᵢ) zu der anderen Wärmeträgermedium-Strömungszone (Zᵢ) führt und wenigstens eine Wärmeträgermediumleitung (42, 40) von der anderen Wärmeträgermedium-Strömungszone (Zᵢ) zu der einen Wärmeträgermedium-Strömungszone (Zᵢ) führt.

7. Temperiergerät nach einem der Ansprüche 4-6, **dadurch gekennzeichnet, dass** bei wenigstens einer Wärmeträgermedium-Strömungszone (Zᵢ) ein von oder zu dieser führender Leitungsabschnitt (46, 48, 56, 58) einer Wärmeträgermediumleitung (40, 42) mit einem von oder zu einer dieser Wärmeträgermedium-Strömungszone (Zᵢ) an der ersten Seite in der Temperierkörperlängsrichtung (L) benachbarten Wärmeträgermedium-Strömungszone (Zᵢ) führenden Leitungsabschnitt (46, 48, 56, 58) einer Wärmeträgermediumleitung (40, 42) verbindbar ist oder mit einem von oder zu einer dieser Wärmeträgermedium-Strömungszone (Zᵢ) an der zweiten Seite in der Temperierkörperlängsrichtung (L) benachbarten Wärmeträgermedium-Strömungszone (Zᵢ) führenden Leitungsabschnitt (46, 48, 56, 58) einer Wärmeträgermediumleitung (40, 42) verbindbar ist.

8. Temperiergerät nach Anspruch 7, **dadurch gekennzeichnet, dass** der von oder zu der wenigstens einen Wärmeträgermedium-Strömungszone (Zᵢ) führende Leitungsabschnitt (46, 48, 56, 58) einer Wärmeträgermediumleitung (40, 42) während einer ersten Betriebsphase mit dem von oder zu der dieser Wärmeträgermedium-Strömungszone (Zᵢ) an der ersten Seite in der Temperierkörperlängsrichtung (L) benachbarten Wärmeträgermedium-Strömungszone (Zᵢ) führenden Leitungsabschnitt (46, 48, 56, 58) einer Wärmeträgermediumleitung (40, 42) verbunden ist und während einer zweiten Betriebsphase mit dem von oder zu der dieser Wärmeträgermedium-Strömungszone (Zᵢ) an der zweiten Seite in der Temperierkörperlängsrichtung (L) benachbarten Wärmeträgermedium-Strömungszone (Zᵢ) führenden Leitungsabschnitt (46, 48, 56, 58) einer Wärmeträgermediumleitung (40, 42) verbunden ist.

9. Temperiergerät nach Anspruch 7 oder 8, **dadurch gekennzeichnet, dass** die Leitungsabschnitte (46, 48, 56, 58) durch ein Ventil (50) verbindbar sind.

10. Temperiergerät nach einem der Ansprüche 1-9, **dadurch gekennzeichnet, dass** wenigstens einem, vorzugsweise jedem, Wärmeträgermedium-Zirkulationssektor (I, II, III, IV) eine Wärmeträgermediumpumpe (34) zugeordnet ist.

11. Temperiergerät nach Anspruch 10, **dadurch gekennzeichnet, dass** in Zuordnung zu jeder zweiten der in der Temperierkörperlängsrichtung (L) aufeinander folgenden Wärmeträgermedium-Strömungszonen (Zᵢ) eine Wärmeträgermediumpumpe (34) vorgesehen ist, derart, dass diese Wärmeträgermedium-Strömungszonen (Zᵢ) in einer ersten Betriebsphase zusammen mit den an der ersten Seite in der Temperierkörperlängsrichtung (L) diesen benachbarten Wärmeträgermedium-Strömungszonen (Zᵢ) jeweils einen Wärmeträgermedium-Zirkulationssektor (I, II, III) bereitstellen und in einer zweiten Betriebsphase zusammen mit den an der zweiten Seite in der Temperierkörperlängsrichtung (L) diesen benachbarten Wärmeträgermedium-Strömungszonen (Zᵢ) jeweils einen Wärmeträgermedium-Zirkulationssektor (I, II, III, IV) bereitstellen.

12. Temperiergerät nach einem der Ansprüche 1-11, **dadurch gekennzeichnet, dass** eine Mehrzahl von Wärmeträgermedium-Zirkulationssektoren (I, II, III, IV) in der Temperierkörperlängsrichtung (L) aufeinander folgend bereitgestellt ist.

13. Temperiergerät nach einem der Ansprüche 1-12, **dadurch gekennzeichnet, dass** der Temperierkörper (14) in einem Temperierkörpergehäuse (12) aufgenommen ist.

14. Temperiergerät nach einem der Ansprüche 1-13, **dadurch gekennzeichnet, dass** die Magnetfeldanordnung (16) an wenigstens einer Seite im Wesentlichen orthogonal zur Temperierkörperlängsrichtung (L) eine Mehrzahl von in der Temperierkörperlängsrichtung (L) aufeinander folgend mit Abstand zueinander angeordneten und im Wesentlichen die Magnetfeld-Erwärmungsbereiche (22) bereitstellenden Magneten (20), vorzugsweise Permanentmagnete, umfasst, wobei zwischen in der Temperierkörperlängsrichtung (L) mit Abstand zueinander angeordneten Magneten (20) die Kühlbereiche (24) bereitgestellt sind.

15. Temperiergerät nach Anspruch 14, **dadurch gekennzeichnet, dass** in der Temperierkörperlängsrichtung (L) aufeinander folgende Magnete (20) an einem durch einen Antrieb zur Linearbewegung in der Verschieberichtung (V) antreibbaren Magnetträger (18) getragen sind.

16. Temperiergerät nach Anspruch 14 oder 15, **dadurch gekennzeichnet, dass** an zwei Seiten des Temperierkörpers (14) im Wesentlichen orthogonal zur Temperierkörperlängsrichtung (L) jeweils eine Mehrzahl von in der Temperierkörperlängsrichtung (L) aufeinander folgend und mit Abstand zueinander angeordneten Magneten (20) vorgesehen ist, wobei wenigstens einem, vorzugsweise jedem, Magneten (20) an einer Seite ein Magnet (20) an der anderen Seite gegenüberliegt.

17. Temperiergerät nach einem der Ansprüche 1-16, **dadurch gekennzeichnet, dass** die von Wärmeeintragfluid durchströmbare oder/und umströmbare Wärmeträgermedium-Strömungszone (Zᵢ) an einem Längsendbereich (26) des Temperierkörpers (14) vorgesehen ist und die von Wärmeabfuhrfluid durchströmbare oder/und umströmbare Wärmeträgermedium-Strömungszone (Z₈) am anderen Längsendbereich (28) des Temperierkörpers (14) vorgesehen ist.

## Claims

1. Temperature control unit, especially a vehicle temperature control unit, comprising:
- at least one temperature control body (14), which is elongated in a longitudinal direction of the temperature control body (L), which is made of magnetocaloric material and through which or/and around which heat transfer medium can flow,
- a magnetic field arrangement (16) with magnetic field heating areas (22) which are arranged following one another in a shifting direction (V) and cooling areas (24) between the magnetic field heating areas (22),
wherein a plurality of heat transfer medium flow zones (Zᵢ) following one another in the longitudinal direction of the temperature control body (L) are provided with the temperature control body (14),
**characterized in that**
at least two heat transfer medium flow zones (Zᵢ) adjacent to one another in the longitudinal direction of the temperature control body (L) provide a heat transfer medium circulation sector (I, II, III, IV),
wherein at least one heat transfer medium flow zone (Zᵢ) provides a heat transfer medium circulation sector (I, II, III) together with a heat transfer medium flow zone (Zᵢ) adjacent to this heat transfer medium flow zone (Zᵢ) on a first side in the longitudinal direction of the temperature control body (L) during a first phase of operation and provides a heat transfer medium circulation sector (I, II, III, IV) together with a heat transfer medium flow zone (Zᵢ) adjacent to this heat transfer medium flow zone (Zᵢ) on a second side in the longitudinal direction of the temperature control body (L) during a second phase of operation, and
**in that** heat introduction fluid can flow through or around a heat transfer medium flow zone (Z₁) arranged in one of two longitudinal end areas (26, 28) of the temperature control body (14) for feeding heat into said heat transfer medium flow zone (Z₁), and **in that** heat discharge fluid can flow through or around a heat transfer medium flow zone (Z₈) arranged in the other of the two longitudinal end areas (26, 28) of the temperature control body (14) for discharging heat from said heat transfer medium flow zone (Z₈), wherein in one type of phases of operation out of a first phase of operation and a second phase of operation, heat discharge fluid can flow through the at least one heat transfer medium flow zone (Z₈) through which heat discharge fluid can flow and heat input fluid can flow through the at least one heat transfer medium flow zone (Z₁) through which heat input fluid can flow, and that in the other type of phases of operation out of a first phase of operation and a second phase of operation, the heat transfer medium flow zone (Z₈) through which heat discharge fluid can flow together with a heat transfer medium flow zone (Z₇) adjacent to this [zone] in the longitudinal direction of the temperature control body (L) provides a heat transfer medium circulation sector (IV) and the heat transfer medium flow zone (Z₁) through which heat input fluid can flow together with a heat transfer medium flow zone (Z₂) adjacent to this [zone] in the longitudinal direction of the temperature control body (L) provides a heat transfer medium circulation sector (I).

2. Temperature control unit in accordance with claim 1, **characterized in that** first phases of operation and second phases of operation alternate with one another.

3. Temperature control unit in accordance with one of the claims 1 or 2, **characterized in that** the longitudinal direction of the temperature control body (L) essentially corresponds to the shifting direction (V).

4. Temperature control unit in accordance with one of the claims 1-3, **characterized in that** a circulation of heat transfer medium is provided in at least one heat transfer medium circulation sector (I, II, III, IV), wherein during the circulation heat transfer medium is removed from one of the heat transfer medium flow zones (Zᵢ) of this heat transfer medium circulation sector (I, II, III, IV) and fed into the other heat transfer medium flow zone (Zᵢ) of this heat transfer medium circulation sector (I, II, III, IV) and heat transfer medium is removed from the other heat transfer medium flow zone (Zᵢ) and fed into the one heat transfer medium flow zone (Zᵢ).

5. Temperature control unit in accordance with claim 4, **characterized in that** the heat transfer medium is removed from the one heat transfer medium flow zone (Zᵢ) on a side (44) located essentially at right angles to the longitudinal direction of the temperature control body (L) and is fed into the other heat transfer medium flow zone (Zᵢ) on the same side (44) and is removed from the other heat transfer medium flow zone (Zᵢ) on another side (54) located essentially at rights angles to the longitudinal direction of the temperature control body (L) and is fed into the one heat transfer medium flow zone (Zᵢ) on the same side (54).

6. Temperature control unit in accordance with claim 4 or 5, **characterized in that** in at least one heat transfer medium circulation sector (Zᵢ) at least one heat transfer medium line (40, 42) leads from the one heat transfer medium flow zone (Zᵢ) to the other heat transfer medium flow zone (Zᵢ) and at least one heat transfer medium line (42, 40) leads from the other heat transfer medium flow zone (Zᵢ) to the one heat transfer medium flow zone (Zᵢ).

7. Temperature control unit in accordance with one of the claims 4-6, **characterized in that** in at least one heat transfer medium flow zone (Zᵢ), a line section (46, 48, 56, 58) of a heat transfer medium line (40, 42) leading from or to this zone can be connected to a line section (46, 48, 56, 58) of a heat transfer medium line (40, 42) leading from or to a heat transfer medium flow zone (Zᵢ) adjacent to this heat transfer medium flow zone (Zᵢ) on the first side in the longitudinal direction of the temperature control body (L) or can be connected to a line section (46, 48, 56, 58) of a heat transfer medium line (40, 42) leading from or to a heat transfer medium flow zone (Zᵢ) adjacent to this heat transfer medium flow zone (Zᵢ) on the second side in the longitudinal direction of the temperature control body (L).

8. Temperature control unit in accordance with claim 7, **characterized in that** the line section (46, 48, 56, 58) of a heat transfer medium line (40, 42) leading from or to the at least one heat transfer medium flow zone (Zᵢ) is connected to the line section (46, 48, 56, 58) of a heat transfer medium line (40, 42) leading from or to the heat transfer medium flow zone (Zᵢ) adjacent to this heat transfer medium flow zone (Zᵢ) on the first side in the longitudinal direction of the temperature control body (L) during a first phase of operation and is connected to the line section (46, 48, 56, 58) of a heat transfer medium line (40, 42) leading from or to the heat transfer medium flow zone (Zᵢ) adjacent to this heat transfer medium flow zone (Zᵢ) on the second side in the longitudinal direction of the temperature control body (L) during a second phase of operation.

9. Temperature control unit in accordance with claim 7 or 8, **characterized in that** the line sections (46, 48, 56, 58) can be connected by means of a valve (50).

10. Temperature control unit in accordance with one of the claims 1-9, **characterized in that** a heat transfer medium pump (34) is associated with at least one, preferably with each, heat transfer medium circulation sector (I, II, III, IV).

11. Temperature control unit in accordance with claim 10, **characterized in that** a heat transfer medium pump (34) is provided in association with every other of the heat transfer medium flow zones (Zᵢ) following one another in the longitudinal direction of the temperature control body (L) such that these heat transfer medium flow zones (Zᵢ) together with the heat transfer medium flow zones (Zᵢ) adjacent to these zones in the longitudinal direction of the temperature control body on the first side provide each a heat transfer medium circulation sector (I, II, III) in a first phase of operation and together with the heat transfer medium flow zones (Zᵢ) adjacent to these zones in the longitudinal direction of the temperature control body (L) provide each a heat transfer medium circulation sector (I, II, III, IV) in a second phase of operation.

12. Temperature control unit in accordance with one of the claims 1-11, **characterized in that** a plurality of heat transfer medium circulation sectors (I, II, III, IV) are provided following one another in the longitudinal direction of the temperature control body (L).

13. Temperature control unit in accordance with one of the claims 1-12, **characterized in that** the temperature control body (14) is received in a temperature control body housing (12).

14. Temperature control unit in accordance with one of the claims 1-13, **characterized in that** the magnetic field arrangement (16) on at least one side essentially at right angles to the longitudinal direction of the temperature control body (L) comprises a plurality of magnets (20), preferably permanent magnets, which are arranged spaced apart from one another and following one another in the longitudinal direction of the temperature control body (L) and which provide essentially the magnetic field heating areas (22), the cooling areas (24) being provided between magnets (20) arranged spaced apart from one another in the longitudinal direction of the temperature control body (L).

15. Temperature control unit in accordance with claim 14, **characterized in that** magnets (20) following one another in the longitudinal direction of the temperature control body (L) are carried on a magnet carrier (18) which can be driven by a drive for linear motion in the shifting direction (V).

16. Temperature control unit in accordance with claim 14 or 15, **characterized in that** a plurality of magnets (20) following one another in the longitudinal direction of the temperature control body (L) and arranged spaced apart from one another are provided each on both sides of the temperature control body (14) essentially at right angles to the longitudinal direction of the temperature control body (L), one magnet (20) on the other side being located opposite at least one, preferably each, magnet (20) on one side.

17. Temperature control unit in accordance with one of the claims 1-16, **characterized in that** the heat transfer medium flow zone (Zᵢ) through which or/and around which heat input fluid can flow is provided on a longitudinal end area (26) of the temperature control body (14) and the heat transfer medium flow zone (Z₈) through which or/and around which heat discharge fluid can flow is provided on the other longitudinal end area (28) of the temperature control body (14).

## Revendications

1. Dispositif de régulation de température, en particulier dispositif de régulation de température de véhicules, comprenant :
- au moins un corps de régulation de température (14), allongé dans une direction longitudinale du corps de régulation de température (L), qui est en matériau magnétocalorique et à travers lequel et/ou autour duquel peut circuler un médium caloporteur,
- un agencement de champ magnétique (16) avec des zones de chauffage de champ magnétique (22) se succédant dans une direction de déplacement (V) et des zones de refroidissement (24) entre les zones de chauffage de champ magnétique (22),
dans lequel une pluralité de zones d'écoulement de médium caloporteur (Zᵢ) se succédant dans la direction longitudinale du corps de régulation de température (L) sont prévues avec le corps de régulation de température (14),
**caractérisé en ce que**
au moins deux zones d'écoulement de médium caloporteur (Zᵢ) adjacentes l'une à l'autre dans le sens longitudinal du corps de régulation de température (L) fournissent un secteur de circulation de médium caloporteur (I, II, III, IV),
dans lequel au moins une zone d'écoulement de médium caloporteur (Zᵢ) fournit pendant une première phase de fonctionnement un secteur de circulation de médium caloporteur (I, II, III) conjointement avec une zone d'écoulement de médium caloporteur (Zᵢ) adjacente à cette zone d'écoulement de médium caloporteur (Zi) sur un premier côté dans la direction longitudinale du corps de régulation de température (L) et fournit pendant une deuxième phase de fonctionnement un secteur de circulation de médium caloporteur (I, II, III, IV) conjointement avec une zone d'écoulement de médium caloporteur (Zᵢ) adjacente à cette zone d'écoulement de médium caloporteur (Zᵢ) sur un deuxième côté dans la direction longitudinale du corps de régulation de température (L), et
**en ce qu'**un fluide d'introduction de chaleur peut s'écouler à travers ou autour d'une zone d'écoulement de médium caloporteur (Zᵢ) agencée dans l'une de deux zones d'extrémité longitudinales (26, 28) du corps de régulation de température (14) pour alimenter en chaleur ladite zone d'écoulement de médium caloporteur (Zᵢ), et **en ce qu'**un fluide d'évacuation de chaleur peut s'écouler à travers ou autour d'une zone d'écoulement de médium caloporteur (Z₈) agencée dans l'autre des deux zones d'extrémité longitudinales (26, 28) du corps de régulation de température (14) pour évacuer la chaleur de ladite zone d'écoulement de médium caloporteur (Z₈), dans lequel, dans un type de phase de fonctionnement parmi une première phase de fonctionnement et une deuxième phase de fonctionnement, le fluide d'évacuation de chaleur peut s'écouler à travers ladite au moins une zone d'écoulement de médium caloporteur (Z₈) à travers laquelle le médium d'évacuation de chaleur peut s'écouler et le fluide d'introduction de chaleur peut s'écouler à travers ladite au moins une zone d'écoulement de médium caloporteur (Zᵢ) à travers laquelle le fluide d'introduction de chaleur peut s'écouler, et que dans l'autre type de phase de fonctionnement parmi la première phase de fonctionnement et la deuxième phase de fonctionnement, la zone d'écoulement de médium caloporteur (Z₈) à travers laquelle le fluide d'évacuation de chaleur peut s'écouler, conjointement avec une zone d'écoulement de médium caloporteur (Z₇) adjacente à cette zone dans la direction longitudinale du corps de régulation de température (L), fournit un secteur de circulation de médium caloporteur (IV) et la zone d'écoulement de médium caloporteur (Zᵢ) à travers laquelle le fluide d'introduction de chaleur peut s'ècouler, conjointement avec une zone d'écoulement de médium caloporteur (Z₂) adjacente à cette zone dans la direction longitudinale du corps de régulation de température (L), fournit un secteur de circulation de médium caloporteur (I).

2. Dispositif de régulation de température selon la revendication 1, **caractérisé en ce que** des premières phases de fonctionnement et des deuxièmes phases de fonctionnement alternent les unes avec les autres.

3. Dispositif de régulation de température selon l'une des revendications 1 ou 2, **caractérisée en ce que** la direction longitudinale du corps de régulation de température (L) correspond essentiellement à la direction de déplacement (V).

4. Dispositif de régulation de température selon l'une des revendications 1 à 3, **caractérisée en ce qu'**une circulation de médium caloporteur est prévue dans au moins un secteur de circulation de médium caloporteur (I, II, III, IV), dans laquelle, pendant la circulation, le médium caloporteur est évacué de l'une des zones d'écoulement de médium caloporteur (Zᵢ) de ce secteur de circulation de médium caloporteur (I, II, III, IV) et introduit dans l'autre zone de circulation de médium caloporteur (Zᵢ) de ce secteur de circulation de médium caloporteur (I, II, III, IV) et le médium caloporteur est évacué de l'autre zone de circulation de médium caloporteur (Zᵢ) et introduit dans ladite une zone de circulation de médium caloporteur (Zᵢ).

5. Dispositif de régulation de température selon la revendication 4, **caractérisé en ce que** le médium caloporteur est évacué de ladite une zone d'écoulement de médium caloporteur (Zᵢ) sur un côté (44) situé essentiellement à angle droit par rapport à la direction longitudinale du corps de régulation de température (L) et est introduit dans l'autre zone d'écoulement de médium caloporteur (Zᵢ) sur le même côté (44) et est évacué de l'autre zone d'écoulement de médium caloporteur (Zᵢ) sur un autre côté (54) situé essentiellement à angle droit par rapport à la direction longitudinale du corps de régulation de température (L) et est introduit dans ladite une zone d'écoulement de médium caloporteur (Zᵢ) sur le même côté (54).

6. Dispositif de régulation de température selon la revendication 4 ou 5, **caractérisé en ce que** dans au moins un secteur de circulation de médium caloporteur (Zᵢ), au moins une conduite de médium caloporteur (40, 42) mène de ladite une zone de circulation de médium caloporteur (Zᵢ) à l'autre zone de circulation de médium caloporteur (Zᵢ) et au moins une conduite de médium caloporteur (42, 40) mène de l'autre zone de circulation de médium caloporteur (Zᵢ) à ladite une zone de circulation de médium caloporteur (Zᵢ).

7. Dispositif de régulation de température selon l'une des revendications 4 à 6, **caractérisée en ce que** dans au moins une zone d'écoulement de médium caloporteur (Zᵢ), une section de conduite (46, 48, 56, 58) d'une conduite de médium caloporteur (40, 42) menant de ou vers cette zone peut être raccordée à une section de conduite (46, 48, 56, 58) d'une conduite de médium caloporteur (40, 42) menant de ou vers une zone d'écoulement de médium caloporteur (Zᵢ) adjacente à cette zone d'écoulement de médium caloporteur (Zᵢ) sur le premier côté dans la direction longitudinale du corps de régulation de température (L) ou peut être raccordé à une section de conduite (46, 48, 56, 58) d'une conduite de médium caloporteur (40, 42) menant de ou vers une zone d'écoulement de médium caloporteur (Zᵢ) adjacente à cette zone d'écoulement de médium caloporteur (Zᵢ) sur le deuxième côté dans la direction longitudinale du corps de régulation de température (L).

8. Dispositif de régulation de température selon la revendication 7, **caractérisé en ce que** la section de conduite (46, 48, 56, 58) d'une conduite de médium caloporteur (40, 42) menant de ou vers ladite au moins une zone d'écoulement de médium caloporteur (Zᵢ) est raccordée pendant une première phase de fonctionnement à la section de conduite (46, 48, 56, 58) d'une conduite de médium caloporteur (40, 42) menant de ou vers la zone d'écoulement de médium caloporteur (Zᵢ) adjacente à cette zone d'écoulement de médium caloporteur (Zᵢ) sur le premier côté dans la direction longitudinale du corps de régulation de température (L), et est raccordée pendant une deuxième phase de fonctionnement à la section de conduite (46, 48, 56, 58) d'une conduite de médium caloporteur (40, 42) menant de ou vers la zone d'écoulement de médium caloporteur (Zᵢ) adjacente à cette zone d'écoulement de médium caloporteur (Zᵢ) sur le deuxième côté dans la direction longitudinale du corps de régulation de température (L).

9. Dispositif de régulation de température selon la revendication 7 ou 8, **caractérisé en ce que** les sections de conduite (46, 48, 56, 58) peuvent être raccordées au moyen d'une vanne (50).

10. Dispositif de régulation de température selon l'une des revendications 1 à 9, **caractérisée en ce qu'**une pompe à médium caloporteur (34) est associée à au moins un, de préférence à chaque secteur de circulation de médium caloporteur (I, II, III, IV).

11. Dispositif de régulation de température selon la revendication 10, **caractérisée en ce qu'**une pompe à médium caloporteur (34) est prévue en association avec une sur deux zones d'écoulement de médium caloporteur (Zᵢ) se succédant dans la direction longitudinale du corps de régulation de température (L) de telle sorte que ces zones d'écoulement de médium caloporteur (Zᵢ), fournissent dans une première phase de fonctionnement, conjointement avec les zones d'écoulement de médium caloporteur (Zᵢ) adjacentes à ces zones sur le premier côté dans la direction longitudinale du corps de régulation de température, respectivement un secteur de circulation de médium caloporteur (I, II, III) et fournissent dans une deuxième phase de fonctionnement, conjointement avec les zones d'écoulement de médium caloporteur (Zᵢ) adjacentes à ces zones sur le deuxième côté dans la direction longitudinale du corps de régulation de température (L), respectivement un secteur de circulation de médium caloporteur (I, II, III, IV).

12. Dispositif de régulation de température selon l'une des revendications 1 à 11, **caractérisé en ce qu'**une pluralité de secteurs de circulation de médium caloporteur (I, II, III, IV) sont prévus se succédant dans la direction longitudinale du corps de régulation de température (L).

13. Dispositif de régulation de température selon l'une des revendications 1-12, **caractérisée en ce que** le corps de régulation de température (14) est reçu dans un boîtier de corps de régulation de température (12).

14. Dispositif de régulation de température selon l'une des revendications 1 à 13, **caractérisée en ce que** l'agencement de champ magnétique (16) comprend, sur au moins un côté, essentiellement à angle droit par rapport à la direction longitudinale du corps de régulation de température (L), une pluralité d'aimants (20), de préférence d'aimants permanents, agencés à distance les uns des autres et se succédant dans la direction longitudinale du corps de régulation de température (L) et qui fournissent essentiellement les zones de chauffage de champ magnétique (22), les zones de refroidissement (24) étant prévues entre les aimants (20) agencés à distance dans la direction longitudinale du corps de régulation de température (L).

15. Dispositif de régulation de température selon la revendication 14, **caractérisée en ce que** des aimants (20) se succédant dans la direction longitudinale du corps de régulation de température (L) sont supportés sur un support d'aimants (18) qui peut être entraîné par un dispositif d'entraînement pour un mouvement linéaire dans la direction de déplacement (V).

16. Dispositif de régulation de température selon la revendication 14 ou 15, **caractérisée en ce qu'**une pluralité d'aimants (20) se succédant dans la direction longitudinale du corps de régulation de température (L) et agencés à distance les uns des autres sont prévus respectivement des deux côtés du corps de régulation de température (14) essentiellement à angle droit par rapport à la direction longitudinale du corps de régulation de température (L), un aimant (20) de l'autre côté étant opposé à au moins un, de préférence à chacun des aimants (20) d'un côté.

17. Dispositif de régulation de température selon l'une des revendications 1-16, **caractérisée en ce que** la zone d'écoulement de médium caloporteur (Zᵢ) à travers et/ou autour de laquelle le fluide d'introduction de chaleur peut s'écouler est prévue sur une zone d'extrémité longitudinale (26) du corps de régulation de température (14) et la zone d'écoulement de médium caloporteur (Z₈) à travers et/ou autour de laquelle le fluide de sortie de chaleur peut s'écouler est prévue sur l'autre zone d'extrémité longitudinale (28) du corps de régulation de température (14).
